# EUROPÄISCHE PATENTSCHRIFT

(11) **EP 3 741 586 B1**
(45) Veröffentlichungstag und Bekanntmachung des Hinweises auf die Patenterteilung: **08.12.2021**
(21) Anmeldenummer: 20166200.4
(22) Anmeldetag: 27.03.2020
(51) Int. Cl.: B60C 19/12

(54) **FAHRZEUGLUFTREIFEN MIT DICHTMITTELLAGE**
PNEUMATIC VEHICLE TYRE WITH SEALANT POSITION
PNEUMATIQUE DE VÉHICULE POURVU DE COUCHE D'ÉTANCHÉITÉ

(30) Priorität: 22.05.2019 DE 102019207493
(43) Veröffentlichungstag der Anmeldung: 25.11.2020
(73) Patentinhaber: Continental Reifen Deutschland GmbH, 30165 Hannover (DE)
(72) Erfinder: Doroshenko, Mikheil, 30419 Hannover (DE); Guardalabene, Joe, 30419 Hannover (DE); Tyburski, Andreas, 30419 Hannover (DE)
(74) Vertreter: Continental Corporation

(56) Entgegenhaltungen:
- CH-A- 119 355
- JP-B1- S5 025 683
- US-A- 2 489 995
- US-A1- 2004 149 366

## Beschreibung

Die Erfindung betrifft einen Fahrzeugluftreifen, der wenigstens eine Dichtmittellage wenigstens auf der dem Laufstreifen gegenüberliegenden Innenfläche aufweist.

Selbstdichtend ausgestaltete Fahrzeugluftreifen sind beispielsweise aus der DE 10 2006 059 286 A1 der Anmelderin bekannt. Hierbei werden Reifen-Standardkonstruktionen nachträglich mit einer Dichtmittellage versehen. Das selbsttätig abdichtende Dichtmittel ist eine selbsthaftende, viskose Dichtmasse, welche von radial innen im Projektionsbereich des Gürtelpakets auf die radial innerste Reifenlage, die weitgehend luftdicht ausgeführte Innenschicht, als Lage aufgetragen wird. Die Dichtmittelschicht ist in der Lage, Einstiche von bis zu fünf Millimetern Durchmesser selbständig abzudichten. Nach einem Durchstich durch den Laufstreifen bis durch die Innenschicht umschließt das Dichtmittel den eingedrungenen Fremdkörper vollständig, dichtet den Innenraum gegenüber der Umgebung ab und verhindert so einen Druckluftverlust des Reifens. Der Fahrer des Fahrzeuges ist nicht gezwungen, den defekten Reifen sofort durch ein vollwertiges Ersatzrad oder ein Notrad zu ersetzen.

Das Dichtmittel zeichnet sich durch Luftdichtigkeit, starke Klebrigkeit und ausgewogenes Fließverhalten aus.

Für den Fall, dass der Fremdkörper die Einstichstelle wieder verlässt, könnte das Dichtmittel nach außen aus dem Reifen austreten. Hierdurch könnten ein Druckverlust im Inneren des Reifens und somit ein instabileres Fahrverhalten verursacht werden. Die US 2004/149366 Al offenbart einen Fahrzeugluftreifen mit zwei radial aneinandergereihten Dichtmittellagen auf der dem Laufstreifen gegenüberliegenden Innenfläche, welche anhand einer faserigen Textillage miteinander verbunden sind.

Der vorliegenden Erfindung liegt daher die Aufgabe zugrunde, einen Fahrzeugluftreifen, der wenigstens eine Dichtmittellage wenigstens auf der dem Laufstreifen gegenüberliegenden Innenfläche aufweist (Fahrzeugluftreifen mit Dichtmittellage), bereitzustellen, bei dem im Fall des Einstiches durch einen Fremdkörper (Einstichobjekt) und dessen nachträgliches Entfernen das Dichtmittel vergleichsweise ortsfest verbleibt und nicht (signifikant) aus dem Reifen austritt. Zudem sollen sich auch während sich das Einstichobjekt noch im Reifen befindet keine Luftkanäle entlang des Einstichobjektes bilden und somit eine optimale Abdichtwirkung erzielt werden.

Gelöst wird diese Aufgabe durch einen Fahrzeugluftreifen laut Anspruch 1.

Durch die beschriebene Anordnung Dichtmittel - Textillage - Dichtmittel ergibt sich im Pannenfall eine optimierte Abdichtwirkung während sich ein Einstichobjekt noch im Reifen befindet. Das erste Dichtmittel wird durch die Textillage fixiert. Gleichzeitig sorgt die Textillage auch für eine Gesamtstabilität der Anordnung um das Einstichobjekt, wodurch sich auch im Fall von Bewegungen des Einstichobjektes im Fahrbetrieb des Reifens ausreichend Dichtmittel entlang des Einstichobjektes anordnet. Hierdurch und durch die zweite Dichtmittellage radial einwärts auf der Textillage wird der Kontakt zwischen Dichtmittel und Einstichobjekt erhöht bzw. eine größere Kontaktfläche geschaffen. Somit werden keine Luftkanäle entlang des Einstichobjektes nach außen gebildet. Es ergibt sich eine optimierte Abdichtwirkung.

Auch nach Entfernen des Einstichobjektes wird durch die Stabilität der genannten Anordnung eine optimierte Abdichtwirkung erzielt und gleichzeitig durch die Fixierung verhindert, dass Dichtmittel aus dem Reifen nach (radial) außen fließt.

Das Dichtmittel fließt im Pannenfall und insbesondere bei Verlust des Einstichobjektes somit nicht (signifikant) aus dem Reifen heraus. Der erfindungsgemäße Fahrzeugluftreifen weist damit eine verbesserte Luftdichtigkeit und Fahrstabilität auch im Pannenfall auf.

Mit "Textillage" ist im erfindungsgemäßen Kontext eine zusätzliche Lage verstehen, die linienförmige Gebilde und/oder flächenförmige Gebilde von insbesondere Fasern und/oder Garnen und/oder Corden umfasst.

Die in Fahrzeugreifen vorhandenen Gürtel-, Bandagen- und Karkasslagen, welche textile Festigkeitsträger aufweisen können, sind hiermit nicht gemeint.

Folien sollen im Rahmen der vorliegenden Erfindung nicht von dem Begriff "Textillage" umfasst sein.

Als kleinstes linienförmige Gebilde weist die Textillage Fasern auf, welche in Folien nicht enthalten sind.

Unter dem Ausdruck "radial einwärts auf der Dichtmittellage" ist eine Position zu verstehen, die in Richtung des Reifeninneren, in radialer Richtung vom Laufstreifen weg, auf der Dichtmittellage angeordnet ist. Diese Position befindet sich auf der radial nach innen gerichteten Oberfläche der Dichtmittellage.

Unter dem Ausdruck "radial einwärts auf der Textillage" ist eine Position zu verstehen, die in Richtung des Reifeninneren auf der Textillage angeordnet ist. Diese Position befindet sich auf der radial nach innen gerichteten Oberfläche der Textillage.

Unter dem Ausdruck "radial auswärts" ist dagegen eine Position zu verstehen, die in Richtung des Reifenäußeren, in Richtung des Laufstreifens, auf der jeweiligen angeordnet ist.

Unter dem Ausdruck "wobei die Textillage mit den Dichtmittellagen verbunden ist" ist zu verstehen, dass die Lagen auf jegliche mögliche Art miteinander verbunden sind und insbesondere zueinander benachbart angeordnet sind.

Gemäß der Erfindung ist die Zugfestigkeit gemäß ISO 527 der Textillage jeweils größer als die Zugfestigkeit der ersten Dichtmittellage und der zweiten Dichtmittellage und gleichzeitig die Bruchdehnung gemäß ISO 527 der ersten Dichtmittellage und der zweiten Dichtmittellage größer ist als die Bruchdehnung der Textillage. Durch die genannten unterschiedlichen Eigenschaftsverhältnisse in Bezug auf die Zugfestigkeit und die Bruchdehnung von Dichtmittellagen und Textillage werden die Kriechbeständigkeit und die Ortsfestigkeit des bzw. der Dichtmittel(s) verbessert.

Durch die vergleichsweise hohe Zugfestigkeit der Textillage und die vergleichsweise geringe Bruchdehnung der Textillage wird erzielt, dass insbesondere das erste Dichtmittel lokal fixiert ist. Dabei erstreckt sich die Textillage mit in die Einstichstelle und verhindert, dass Dichtmittel aus der Einstichstelle heraus fließt. Das textile Material fungiert dabei als Verstärkung.

Die Zugfestigkeit und die Bruchdehnung von Textil- und Dichtmittellagen werden im Rahmen der vorliegenden Erfindung gemäß ISO 527 anhand von Stab-Probekörpern des Typs 1A bei einer Testgeschwindigkeit von 5 mm/min bestimmt.

Die Textillage weist bevorzugt eine Zugfestigkeit gemäß ISO 527 von 15 bis 450 MPa auf. Besonders bevorzugt weist die Textillage eine Zugfestigkeit gemäß ISO 527 von 40 bis 400 MPa, ganz besonders bevorzugt von 20 bis 250 MPa auf.

Gemäß einer bevorzugten Ausführungsform der Erfindung weist die Textillage eine Zugfestigkeit gemäß ISO 527 von 20 bis 100 MPa, besonders bevorzugt 20 bis 60 MPa, auf.

Mit einer Zugfestigkeit von 15 bis 450 MPa bzw. in den besonders bevorzugten Bereichen ist die Textillage besonders gut geeignet, um das Dichtmittel lokal zu fixieren und sich gleichzeitig selbst partiell in die Einstichstelle zu bewegen.

Die Textillage weist bevorzugt eine Bruchdehnung gemäß ISO 527 von 1,1 bis 400 % auf. Besonders bevorzugt weist die Textillage eine Bruchdehnung gemäß ISO 527 von 15 bis 200 %, ganz besonders bevorzugt 50 bis 200 %, wiederum bevorzugt 55 bis 150 %, und wiederum besonders bevorzugt 60 bis 150 %, auf.

Hierdurch wird wie oben beschrieben das Dichtmittel lokal fixiert und das Fließverhalten optimiert, insbesondere wird ein Fließen des Dichtmittels aus der Einstichstelle verhindert.

Als Material der Textillage ist prinzipiell jedes Material geeignet, welches ein Netzwerk aus natürlichen und/oder synthetischen Fasern ausbilden kann.

Bevorzugt umfasst die Textillage wenigstens ein Material, welches ausgewählt ist aus der Gruppe bestehend aus
a) Polyamiden (PA) wie Nylon,
b) Polyestern wie Polybutylenterephthalat (PBT) und Polyethylenterephthalat (PET),
c) Polyketonen wie Polyetheretherketon (PEEK),
d) Polyarylat,
e) Polycarbonat (PC),
f) Carbonfasern,
g) Polyether wie Polyphenylenether (PPE, früher Polyphenylenoxid),
h) Cellulose,
i) Cellulose-Derivate wie Celluloseacetat (CA) und Cellulosepropionat,
j) Regeneratcellulose,
k) Rayon,
l) Aramide wie m-Aramid, p-Aramid und Gemische aus m-Aramid und p-Aramid,
m) Polyoxymethylen,
n) Fluorpolymeren, wie Ethylen-Tetrafluorethylen-Copolymer (ETFE) und Ethylen-Chortrifluorethylen (ECTFE),
o) Polyolefinen, wie Polypropylen (PP) und Polyethylen (PE),
p) Naturfasern, wie Baumwolle, Jute, Bambus, und Fasern tierischen Ursprungs wie Seide, Schafswolle und Kamelhaar,
q) Glasfasern,
r) Phenol-Formaldehyd,
s) Polyvinylchlorid (PVC),
t) Polyurethan (PU).

Hierbei ist auch eine Kombination von zwei oder mehrerer sämtlicher genannter Materialien umfasst.

Die Textillage weist bevorzugt eine Schmelztemperatur von 100 bis 1500 °C, bevorzugt 100 bis 265 °C auf. Die Schmelztemperatur wird gemäß ISO 3146:2000 bestimmt.

Die Textillage umfasst Fasern als kleinste Einheit, die einzeln vorliegen können und/oder zu Garnen verdreht sein können.

Die einzelnen Fasern weisen bevorzugt jeweils einen Durchmesser von 5 bis 2000 Mikrometern (µm), bevorzugt 100 bis 1000 µm, auf.

Gemäß vorteilhafter Ausführungsformen der Erfindung liegen einzelne Fasern in der Textillage vor, wobei die Fasern parallel zu der gekrümmten Fläche aus axialer Richtung und Umlaufrichtung ausgerichtet sind und somit bevorzugt nicht parallel zur radialen Richtung ausgerichtet sind.

Die einzelnen Fasern können prinzipiell beliebig zueinander angeordnet sein.

Gemäß einer vorteilhaften Ausführungsform der Erfindung sind die Fasern parallel zueinander und dabei bevorzugt auch parallel zu axialer Richtung und Umlaufrichtung des Reifens angeordnet.

Bevorzugt beträgt der Abstand der Fasern senkrecht zur Erstreckungsrichtung der Fasern 2 bis 200 µm (Mikrometer), besonders bevorzugt 2 bis 100 µm, ganz besonders bevorzugt 2 bis 20 µm, wiederum bevorzugt 5 bis 15 µm, insbesondere 10 µm.

Gemäß einer weiteren vorteilhaften Ausführungsform der Erfindung sind die einzelnen Fasern so zueinander ausgerichtet, dass sie in einem Winkel von 0 bis 90°, besonders bevorzugt 25 bis 45°, zueinander angeordnet sind. Bevorzugt wirken die Fasern bei entsprechend hoher Anzahl an Fasern quasi durch die Wechselwirkungen untereinander und mit den Dichtmittellagen wie eine Gewebelage.

Gemäß weiterer vorteilhafter Ausführungsformen sind Fasern zu Garnen verdreht.

Es können auch Garne und Fasern gemeinsam in der Textillage vorliegen.

Für den Fall, dass Fasern zu Garnen verdreht sind, können auch Fasern unterschiedlicher Materialien miteinander verdreht sein.

Gemäß vorteilhafter Ausführungsformen können die Garne auch zu Corden verdreht sein. Hierbei können auch Garne unterschiedlicher Corde miteinander verdreht sein.

Es können auch Garne und/oder Corde und/oder Fasern gemeinsam in der Textillage vorliegen.

Bei den Verdrehungen von Fasern zu Garnen und/oder Garnen zu Corden sind sämtliche Konfigurationen hinsichtlich der Drehrichtung denkbar.

Die Textillage umfasst gemäß vorteilhafter Ausführungsformen parallel zueinander ausgerichtete linienförmige Gebilde. Hierbei kann es sich um einzelne Fasern und/oder Garne und/oder Zwirne und/oder Corde und/oder Seile, bevorzugt aus einem oder mehreren der oben genannten Materialien, handeln.

Für den Fall, dass Garne und/oder Zwirne und/oder Corde und/oder Seile parellel zueinander ausgerichtet vorliegen, kann der Abstand zwischen den einzelnen Gebilden prinzipiell beliebig sein, beträgt jedoch bevorzugt 2 µm bis 5 mm.

Der Abstand zueinander sollte zumindest nicht so groß sein, dass keine gemeinsame Verstärkung mehr auftritt, sondern gering genug, damit die Textillage auch eine ausreichende Festigkeit aufweist und die technische Aufgabe gelöst wird.

Die linienförmigen Gebilde sind besonders bevorzugt parallel zum Laufstreifen bzw. parallel zur gekrümmten Fläche aus axialer Richtung und Umlaufrichtung ausgerichtet.

Die Textillage umfasst gemäß weiterer vorteilhafter Ausführungsformen flächenförmige textile Gebilde wie insbesondere Gewebe, Gewirke, Gestricke, Geflechte, Nähgewirke, Vliesstoffe und Filze.

Die Textillage ist gemäß besonders vorteilhafter Ausführungsformen ein Gewebe aus Fasern und/oder Garnen und/oder Corden.

Im Falle eines Gewebes aus Fasern und/oder Garnen und/oder Corden sind diese bevorzugt in einem Winkel von 0 bis 90°, besonders bevorzugt 25 bis 45°, zueinander angeordnet.

Die Textillage kann auch mehrere linien- oder flächenförmige Gebilde aufweisen, die radial übereinander angeordnet sind und damit aus einer, zwei oder mehreren radial übereinander liegenden textilen Lagen bestehen.

Gemäß einer vorteilhaften Ausführungsform der Erfindung beträgt die Viskosität (bei 100 °C) der ersten und der zweiten Dichtmittellage 300 bis 20000 Pa^{∗}s.

Unter "Viskosität" wird im Rahmen der vorliegenden Erfindung die dynamische Scherviskosität bei 100 °C betrachtet, sofern nichts anderes angegeben ist. Die Messung der dynamischen Scherviskosität bei 100 °C erfolgt mittels eines Rheometers (HAAKE RheoStress 6000 der Firma Thermo Scientific, "Measuring plate cover" MPC20) mit einer Frequenz von 0,02 Hz.

Ferner ist es denkbar, dass radial einwärts der zweiten Dichtmittellage weitere Textillagen und/oder Dichtmittellagen angeordnet sind.

Für die weiteren Dichtmittellagen und Textillagen gelten die Ausführungen bezüglich der ersten und zweiten Dichtmittellage bzw. der Textillage, sofern nichts anderes angegeben ist.

Gemäß einer vorteilhaften Weiterbildung der Erfindung ist radial einwärts auf der zweiten Dichtmittellage eine weitere, dritte Dichtmittellage angeordnet, wobei sich insbesondere die Dichtmittel der zweiten und der weiteren Dichtmittellage hinsichtlich der Viskosität voneinander unterscheiden. Bevorzugt ist dabei die Viskosität der zweiten Dichtmittellage mindestens 1,15-mal größer als die der weiteren, dritten Dichtmittellage.

Beispielsweise beträgt die Viskosität der weiteren Dichtmittellage 5000 Pa^{∗}s (Pascal mal Sekunde) und die der zweiten Dichtmittellage dann mindestens 5750 Pa^{∗}s.

Dadurch, dass die weitere Dichtmittellage eine geringere Viskosität aufweist, kann dieses Dichtmittel im Pannenfall den Bewegungen des Einstichobjektes besser folgen und somit die Bildung von Luftkanälen besonders gut verhindern.

Die Bewegung des Einstichobjektes (im Fahrbetrieb des Reifens) ist an dessen Spitze - zum Beispiel im Falle eines Nagels -, die nach radial einwärts gerichtet ist, am größten, sodass hier der Vorteil eines weiteren Dichtmittels mit einer - wie vorgenannt beschrieben - geringeren Viskosität besonders zum Tragen kommt.

Gemäß einer weiteren vorteilhaften Weiterbildung der Erfindung ist radial einwärts auf der zweiten Dichtmittellage eine zweite Textillage und radial einwärts auf der zweiten Textillage eine weitere, dritte Dichtmittellage angeordnet.

Hierdurch wird eine weitere Verstärkung und Stabilisierung / erhöhte Positionsstabilität des Dichtmittels erzielt, was wiederum dazu führt, dass selbst bei Bewegungen des Einstichobjektes im Fahrbetrieb des Reifens keine Luftkanäle entlang des Einstichobjektes gebildet werden.

Die erste und die zweite sowie ggf. jede weitere, insbesondere eine dritte, Dichtmittellage umfassen jeweils wenigstens ein Dichtmittel. Hierbei ist prinzipiell jedes Dichtmittel umfasst, das insbesondere aufgrund der Zusammensetzung und des Fließverhaltens eine Lage innerhalb eines Fahrzeugluftreifens ausbilden kann und im Pannenfall selbstabdichtend wirkt.

Die Dichtmittel der ersten und der zweiten sowie ggf. weiterer Dichtmittellagen können gleich oder verschieden zueinander sein.

Unterschiedliche Viskositäten können insbesondere über die Wahl der Polymere und/oder Vernetzungssubstanzen und/oder deren Mengen und/oder der Füllstoffmenge angepasst werden.

Bevorzugt basiert das Dichtmittel der ersten und der zweiten Dichtmittellage und jeder weiteren, insbesondere einer dritten Dichtmittellage, auf der Vernetzung eines Kautschuks und/oder Polyolefins.

Gemäß einer vorteilhaften Ausführungsform der Erfindung sind die Dichtmittel der ersten und der zweiten Dichtmittellage gleich und basieren auf der Vernetzung eines Kautschuks und/oder Polyolefins.

Bei dem Kautschuk kann es sich um alle dem Fachmann bekannten Kautschuktypen handeln. Es ist auch ein Gemisch verschiedener Kautschuke denkbar.

Gemäß einer bevorzugten Ausführungsform der Erfindung handelt es sich bei dem Kautschuk um Naturkautschuk (NR) und/oder Butadien-Kautschuk (BR) und/oder Isopren-Kautschuk (IR) und/oder Styrol-Butadien-Kautschuk (SBR) und/oder Polychloropren (CR) und/oder Butylkautschuk (IIR) und/oder Brombutylkautschuk (BIIR) und/oder Chlorbutylkautschuk (CIIR).

Diese Kautschuktypen sind für die Verarbeitungstemperaturen bei der Herstellung des Reifendichtmittels und später bei der Anwendung im Reifen besonders gut geeignet. Besonders bevorzugt wird wenigstens Butylkautschuk (IIR) verwendet. Butylkautschuk eignet sich besonders gut, da er eine vergleichsweise hohe Luftdichtigkeit aufweist.

Das wenigstens eine Polyolefin weist bevorzugt ein Zahlenmittel der Molekulargewichtsverteilung Mn gemäß GPC von 400 bis 2500 g/mol, besonders bevorzugt 800 bis 2500 g/mol, ganz besonders bevorzugt 800 bis 1600 g/mol, wiederum bevorzugt 1200 bis 1600 g/mol, wiederum besonders bevorzugt 1200 bis 1400 g/mol, beispielsweise 1300 g/mol, auf.

Ein Polyolefin mit den genannten Bereichen für das Mn ist besonders geeignet, um die gewünschte Fließfähigkeit bei gleichzeitiger Abdichtwirkung des Dichtmittels im Pannenfall zu erzeugen.

Hierbei ist es besonders bevorzugt, dass das wenigstens eine Polyolefin wenigstens ein Polybuten ist.

Dieses stellt die Klebrigkeit des fertigen Dichtmittels ein und bestimmt die Fließfähigkeit im Produktionsprozess sowie die lokale Ortsfestigkeit des fertigen Dichtmittels.

Es kann sich auch um ein Gemisch zweier oder mehrerer Polybutene mit jeweils einem Mn von 400 bis 2500 g/mol handeln, wobei sich die Polybutene im Mn unterscheiden können. Geeignete Polybutene, auch Polyisobutene genannt, sind beispielsweise unter den Handelsnamen Indopol^{®} Polybutene der Firma INEOS Capital Limited erhältlich.

Es ist auch ein Gemisch wenigstens eines Polybutens mit wenigstens einem weiteren Polyolefin denkbar.

Dem Fachmann ist klar, dass die genannten Bestandteile im vernetzten Dichtmittel zumindest teilweise in chemisch veränderter Form, insbesondere als Derivate, vorliegen.

Bevorzugt basiert das Dichtmittel auf der Vernetzung durch wenigstens einen Vernetzer, der ausgewählt ist aus der Gruppe enthaltend, besonders bevorzugt bestehend aus, Polymethylolharz und Divinylbenzol und Chinonen. Das Chinon ist bevorzugt ein Chinondioxim, beispielsweise Dibenzoylchinondioxim oder para-Benzochinondioxim. Besonders bevorzugt ist para-Benzochinondioxim.

Bevorzugt basiert das Dichtmittel auf der Vernetzung durch wenigstens einen Vernetzer in Kombination mit einem Vernetzungsinitiator, wobei der Vernetzungsinitiator bevorzugt ausgewählt aus der Gruppe enthaltend Bleioxid und andere Metalloxide und peroxidische Verbindungen. Der Vernetzungsinitiator ist eine chemische Verbindung, welche die Vernetzung des Dichtmittels initiiert.

Eine peroxidische Verbindung ist eine chemische Verbindung, die wenigstens eine Peroxid-Einheit, also -O-O- enthält (wobei O = Sauerstoff). Es können auch mehrere Peroxide eingesetzt werden. Das oder die Peroxid(e) sind bevorzugt ausgewählt aus der Gruppe bestehend aus Diaroylperoxiden, Diacylperoxiden und Peroxyestern.

Der Vernetzungsinitiator kann als reine Substanz oder in einem Gemisch zugegeben werden. Im Falle eines Gemisches, beispielsweise von 50 Gew.-% Dibenzoylperoxid in Dibutylmaleat, geht nur die Menge des enthaltenen Peroxides in die Menge an Vernetzungsinitiator mit ein, sodass in den angegebenen Mengen des wenigstens einen Vernetzungsinitiators Begleitsubstanzen wie Dibutylmaleat nicht eingerechnet sind.

Das Dichtmittel kann ferner weitere Bestandteile enthalten, wie insbesondere Füllstoff(e), Klebrigmacher, Weichmacher, wie z. B. Öl(e), sowie gegebenenfalls weitere Zusatzstoffe, wie z. B. Farbpigmente und/oder Zinkoxid und/oder Schwefel.

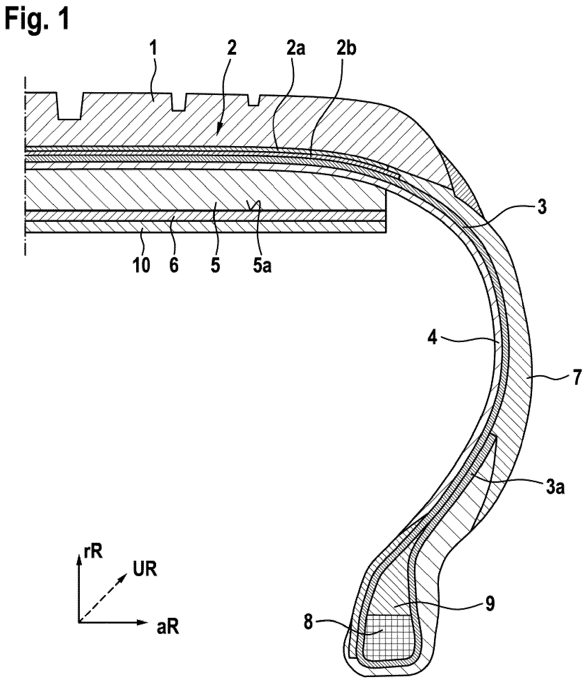

Weitere Einzelheiten der Erfindung werden anhand der Figuren 1 bis 4, die schematische Darstellungen von weiteren Ausführungsbeispielen sind, näher erläutert.

Die wesentlichen Bestandteile, aus welchen sich der erfindungsgemäße Fahrzeugluftreifen zusammensetzt, sind ein profilierter Laufstreifen 1, ein bei der gezeigten Ausführung aus zwei Lagen 2a, 2b bestehendes Gürtelpaket 2, eine einlagige Karkasse 3, welche um die Wulstkerne 8 und Wulstkernprofile 9 von axial innen nach axial außen herumgeführt ist und im Karkasshochschlag 3a endet, sowie Seitenwände 7. Die beiden Lagen 2a, 2b des Gürtelpakets 2 bestehen aus in eine Gummimischung eingebetteten Festigkeitsträgern aus Stahlcord, welche innerhalb jeder Lage parallel zueinander verlaufen, wobei die Stahlcorde der einen Lage 2a in kreuzender Anordnung zu den Stahlcorden der zweiten Lage 2b orientiert sind und mit der Reifenumfangsrichtung jeweils einen Winkel zwischen 15° und 45° einschließen. Auch die einlagige Karkasse 3 kann in herkömmlicher und bekannter Weise ausgeführt sein und somit in eine Gummimischung eingebettete, in radialer Richtung verlaufende Verstärkungsfäden aus einem textilen Material oder aus Stahlcord aufweisen. Die Selbstdichtung des Fahrzeugluftreifens ist durch eine nach der Vulkanisation des Fahrzeugluftreifens nachträglich radial innen umlaufend aufgebrachte Dichtmittellage 5 erhalten. Die Dichtmittellage 5 weist im Wesentlichen die Breite des Gürtelpakets 2 auf und ist im Wesentlichen in dessen Projektion angeordnet und weist einen in der die Reifenachse beinhaltenden Querschnittsebene ausgebildeten Querschnitt mit einer radial nach innen gerichteten in axialer Richtung, im Wesentlichen parallel zum Gürtelpaket, verlaufende Oberfläche 5a auf.

Gemäß dem Beispiel in Figur 1 ist radial einwärts auf der Dichtmittellage 5, also auf der radial nach innen gerichteten Oberfläche 5a der Dichtmittellage 5, eine Textillage 6 angeordnet. Auf der Textillage 6 ist radial einwärts eine zweite Dichtmittellage 10 angeordnet.

Die Textillage 6 fixiert das Dichtmittel lokal und stabilisiert die Einstichstelle, sodass nach einem Pannenfall während der Bewegung des Reifens sich entlang des Einstichobjektes kein Luftkanal bildet.

Im Fall des Verlustes des Einstichobjektes fließt kein oder so gut wie kein Dichtmittel aus dem Reifen aus. Die Textillage 6 umfasst beispielsweise ein textiles Gewebe.

Beispielsweise können die Gewebe unter den Handelsnamen SEFAR NITEX^{®} (PA), SEFAR PETEX^{®} (PET), SEFAR^{®} PROPYLTEX (PP), SEFAR^{®} FLUORTEX (ETFE, ECTFE) oder SEFAR^{®} PEEKTEX als Textillage 6 verwendet werden.

Gemäß einer weiteren beispielhaften Ausführungsform umfasst die Textillage 6 einzelne Fasern 11, die parallel zur Fläche aus axialer Richtung und Umlaufrichtung angeordnet sind und somit senkrecht zur radialen Richtung ausgerichtet sind.

Einzelne Fasern, die parallel zu einander ausgerichtet sind, weisen beispielsweise einen Abstand von 5 bis 15 µm, insbesondere 10 µm zueinander auf.

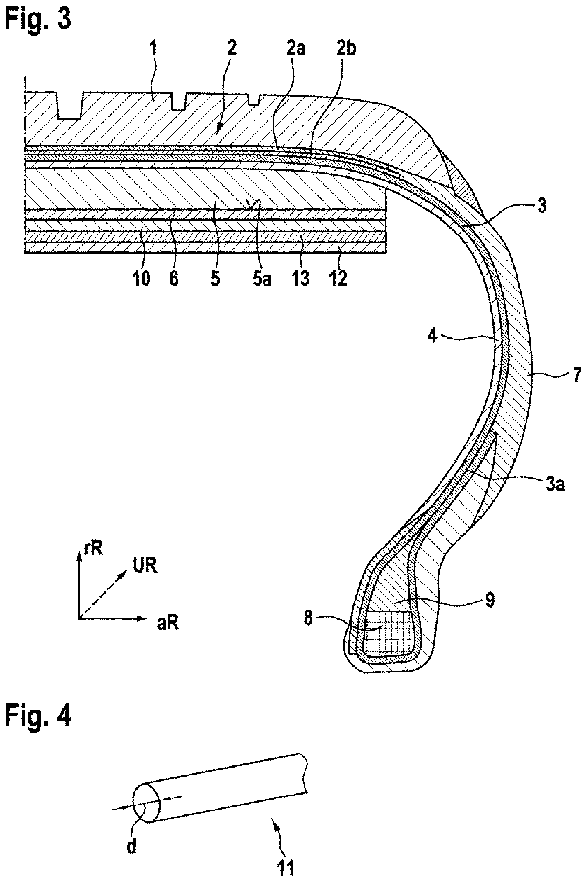

In Fig. 4 ist schematisch eine Faser 11 gezeigt. Der Durchmesser d der Fasern beträgt beispielsweise 500 µm. Der Durchmesser wird wie in Figur 4 erkennbar im Querschnitt senkrecht zur Erstreckungsrichtung der Faser gemessen.

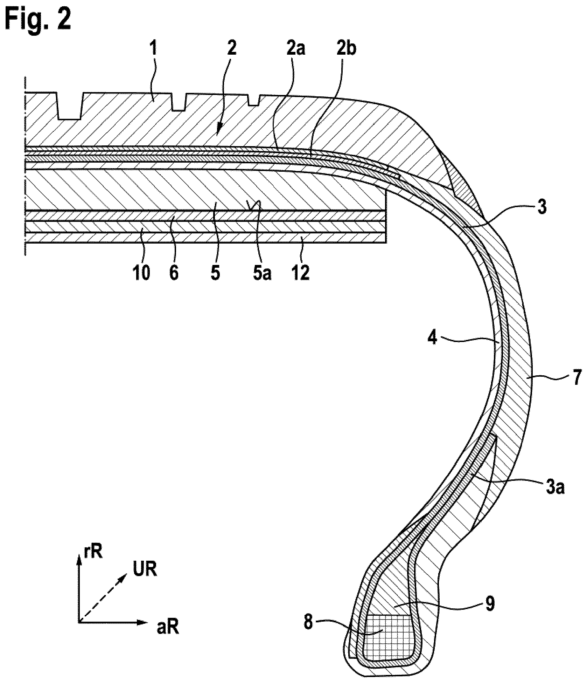

Figur 2 unterscheidet sich von Figur 1 dahingehend, dass radial einwärts auf der zweiten Dichtmittellage 10 eine weitere, dritte Dichtmittellage 12 angeordnet ist, wobei sich insbesondere die Dichtmittel der zweiten und der weiteren, dritten Dichtmittellage hinsichtlich der Viskosität voneinander unterscheiden. Beispielsweise beträgt die Viskosität der weiteren Dichtmittellage 5000 Pa^{∗}s (Pascal mal Sekunde) und die der zweiten Dichtmittellage 5750 Pa^{∗}s.

Figur 3 unterscheidet sich von Figur 1 dahingehend, dass radial einwärts auf der zweiten Dichtmittellage 10 eine zweite Textillage 13 und radial einwärts auf der zweiten Textillage 13 eine weitere, dritte Dichtmittellage 12 angeordnet ist.

### Bezugszeichenliste

### (Teil der Beschreibung)

- 1: Laufstreifen
- 2: Gürtelpaket
- 2a: Gürtellage
- 2b: Gürtellage
- 3: Karkasse
- 3a: Karkasshochschlag
- 4: Innenschicht
- 5: Erste Dichtmittellage
- 5a: radial nach innen gerichtete in axialer Richtung, im Wesentlichen parallel zum Gürtelpaket, verlaufende Oberfläche der ersten Dichtmittellage
- 6: Textillage
- 7: Seitenwand
- 8: Wulstkern
- 9: Wulstkernprofil
- 10: Zweite Dichtmittellage
- 11: Faser
- 12: Weitere, dritte Dichtmittellage
- 13: Zweite Textillage

- d: Durchmesser einer Faser
- rR: radiale Richtung
- aR: axiale Richtung
- UR: Umlaufrichtung des Reifens

## Patentansprüche

1. Fahrzeugluftreifen, der eine erste Dichtmittellage (5) wenigstens auf der dem Laufstreifen (1) gegenüberliegenden Innenfläche aufweist,
wobei radial einwärts auf der ersten Dichtmittellage (5) wenigstens eine Textillage (6) umfassend Fasern (11) angeordnet ist,
und wobei radial einwärts auf der Textillage (6) eine zweite Dichtmittellage (10) angeordnet ist, **dadurch gekennzeichnet, dass** die Textillage (6) mit der ersten Dichtmittellage (5) sowie der zweiten Dichtmittellage (10) verbunden ist, wobei die Zugfestigkeit gemäß ISO 527 der Textillage (6) jeweils größer ist als die Zugfestigkeit der ersten Dichtmittellage (5) und der zweiten Dichtmittellage (10) und gleichzeitig die Bruchdehnung gemäß ISO 527 der ersten Dichtmittellage (5) und der zweiten Dichtmittellage (10) größer ist als die Bruchdehnung der Textillage (6).

2. Fahrzeugluftreifen nach Anspruch 1, **dadurch gekennzeichnet, dass** die Textillage (6) eine Zugfestigkeit gemäß ISO 527 von 15 bis 450 MPa, bevorzugt 40 bis 400 MPa, besonders bevorzugt 20 bis 100 MPa, aufweist.

3. Fahrzeugluftreifen nach einem der vorherigen Ansprüche, **dadurch gekennzeichnet, dass** radial einwärts auf der zweiten Dichtmittellage (10) eine weitere, dritte Dichtmittellage (12) angeordnet ist, wobei sich die Dichtmittel der zweiten und der weiteren, dritten Dichtmittellage hinsichtlich der dynamischen Scherviskosität bei 100 °C voneinander unterscheiden, wobei die Viskosität der zweiten Dichtmittellage (12) mindestens 1,15-mal größer als die der weiteren, dritten Dichtmittellage (12).

4. Fahrzeugluftreifen nach einem der Ansprüche 1 oder 2, **dadurch gekennzeichnet, dass** radial einwärts auf der zweiten Dichtmittellage (10) eine zweite Textillage (13) und radial einwärts auf der zweiten Textillage (13) eine weitere, dritte Dichtmittellage (12) angeordnet ist.

5. Fahrzeugluftreifen nach einem der vorherigen Ansprüche, **dadurch gekennzeichnet, dass** die Textillage(n) (6, 13) wenigstens ein textiles Material umfasst/umfassen, welches ausgewählt ist aus der Gruppe bestehend aus a) Polyamiden (PA) wie Nylon, b) Polyestern wie Polybutylenterephthalat (PBT) und Polyethylenterephthalat (PET), c) Polyketonen wie Polyetheretherketon (PEEK), d) Polyarylat, e) Polycarbonat (PC), f) Carbonfasern, g) Polyether wie Polyphenylenether (PPE), h) Cellulose, i) Cellulose-Derivate wie Celluloseacetat (CA) und Cellulosepropionat, j) Regeneratcellulose, k) Rayon, l) Aramide wie m-Aramid, p-Aramid und Gemische aus m-Aramid und p-Aramid, m) Polyoxymethylen, n) Fluorpolymeren, wie Ethylen-Tetrafluorethylen-Copolymer (ETFE) und Ethylen-Chortrifluorethylen (ECTFE), o) Polyolefine, wie Polypropylen (PP) und Polyethylen (PE), p) Naturfasern, wie Baumwolle, Jute, Bambus, und Fasern tierischen Ursprungs wie Seide, Schafswolle und Kamelhaar, q) Glasfasern, r) Phenol-Formaldehyd, s) Polyvinylchlorid (PVC), t) Polyurethan (PU).

6. Fahrzeugluftreifen nach einem der vorherigen Ansprüche, **dadurch gekennzeichnet, dass** die erste Dichtmittellage (5) und die zweite Dichtmittellage (10) und ggf. jede weitere, insbesondere eine dritte, Dichtmittellage (12) ein Dichtmittel umfassen, welches auf der Vernetzung eines Kautschuks und/oder Polyolefins basiert.

7. Fahrzeugluftreifen nach einem der vorherigen Ansprüche, **dadurch gekennzeichnet, dass** die Fasern (11) einen Durchmesser (d) von 5 bis 2000 Mikrometern (µm) aufweisen.

8. Fahrzeugluftreifen nach einem der vorherigen Ansprüche, **dadurch gekennzeichnet, dass** die Textillage(n) (6, 13) parallel zueinander ausgerichtete linienförmige Gebilde aufweist/aufweisen, wie insbesondere Fasern (11) und/oder Garne und/oder Zwirne und/oder Corde und/oder Seile.

9. Fahrzeugluftreifen nach einem der vorherigen Ansprüche, **dadurch gekennzeichnet, dass** die Textillage(n) (6, 13) ein Gewebe aus Fasern (11) und/oder Garnen und/oder Corden umfasst/umfassen.

## Claims

1. Pneumatic vehicle tyre having a first sealant ply (5) at least on the inner face opposite the tread (1), where at least one textile ply (6) comprising fibres (11) is disposed radially inward atop the first sealant ply (5),
and where a second sealant ply (10) is disposed radially inward atop the textile ply (6),
**characterized in that**
the textile ply (6) is bonded to the first sealant ply (5) and the second sealant ply (10), where the tensile strength according to ISO 527 of the textile ply (6) is greater in each case than the tensile strength of the first sealant ply (5) and the second sealant ply (10), and the elongation at break according to ISO 527 of the first sealant ply (5) and the second sealant ply (10) is simultaneously greater than the elongation at break of the textile ply (6).

2. Pneumatic vehicle tyre according to Claim 1, **characterized in that** the textile ply (6) has a tensile strength according to ISO 527 of 15 to 450 MPa, preferably 40 to 400 MPa, more preferably 20 to 100 MPa.

3. Pneumatic vehicle tyre according to either of the preceding claims, **characterized in that** a further, third sealant ply (12) is disposed radially inward atop the second sealant ply (10), where the sealants of the second and of the further, third sealant plies differ from one another in terms of dynamic shear viscosity at 100°C, where the viscosity of the second sealant ply (12) is at least 1.15 times greater than that of the further, third sealant ply (12).

4. Pneumatic vehicle tyre according to either of Claims 1 and 2, **characterized in that** a second textile ply (13) is disposed radially inward atop the second sealant ply (10), and a further, third sealant ply (12) is disposed radially inward atop the second textile ply (13).

5. Pneumatic vehicle tyre according to any of the preceding claims, **characterized in that** the textile ply/plies (6, 13) comprise(s) at least one textile material selected from the group consisting of a) polyamides (PA) such as nylon, b) polyesters such as polybutylene terephthalate (PBT) and polyethylene terephthalate (PET), c) polyketones such as polyetheretherketone (PEEK), d) polyarylate, e) polycarbonate (PC), f) carbon fibres, g) polyethers such as polyphenylene ethers (PPE), h) cellulose, i) cellulose derivatives such as cellulose acetate (CA) and cellulose propionate, j) regenerated cellulose, k) rayon, 1) aramids such as m-aramid, p-aramid and mixtures of m-aramid and p-aramid, m) polyoxymethylene, n) fluoropolymers, such as ethylene-tetrafluoroethylene copolymer (ETFE) and ethylene-chlorotrifluoroethylene (ECTFE), o) polyolefins, such as polypropylene (PP) and polyethylene (PE), p) natural fibres, such as cotton, jute, bamboo, and fibres of animal origin, such as silk, sheeps' wool and camel hair, q) glass fibres, r) phenyl-formaldehyde, s) polyvinyl chloride (PVC), t) polyurethane (PU).

6. Pneumatic vehicle tyre according to any of the preceding claims, **characterized in that** the first sealant ply (5) and the second sealant ply (10) and any further sealant ply (12), especially a third, comprise a sealant based on the crosslinking of a rubber and/or polyolefin.

7. Pneumatic vehicle tyre according to any of the preceding claims, **characterized in that** the fibres (11) have a diameter (d) of 5 to 2000 micrometres (µm).

8. Pneumatic vehicle tyre according to any of the preceding claims, **characterized in that** the textile ply/plies (6, 13) has/have a mutually parallel-aligned linear structure, such as, in particular, fibres (11) and/or yarns and/or threads and/or cords and/or ropes.

9. Pneumatic vehicle tyre according to any of the preceding claims, **characterized in that** the textile ply/plies (6, 13) comprise(s) a weave made of fibres (11) and/or yarns and/or cords.

## Revendications

1. Pneumatique de véhicule, qui comprend une première couche d'agent d'étanchéité (5) au moins sur la surface intérieure opposée à la bande de roulement (1),
au moins une couche textile (6) comprenant des fibres (11) étant agencée radialement vers l'intérieur sur la première couche d'agent d'étanchéité (5),
et une deuxième couche d'agent d'étanchéité (10) étant agencée radialement vers l'intérieur sur la couche textile (6), **caractérisé en ce que**
la couche textile (6) est reliée à la première couche d'agent d'étanchéité (5), ainsi qu'à la deuxième couche d'agent d'étanchéité (10), la résistance à la traction selon ISO 527 de la couche textile (6) étant à chaque fois supérieure à la résistance à la traction de la première couche d'agent d'étanchéité (5) et de la deuxième couche d'agent d'étanchéité (10), et simultanément l'allongement à la rupture selon ISO 527 de la première couche d'agent d'étanchéité (5) et de la deuxième couche d'agent d'étanchéité (10) étant supérieur à l'allongement à la rupture de la couche textile (6).

2. Pneumatique de véhicule selon la revendication 1, **caractérisé en ce que** la couche textile (6) présente une résistance à la traction selon ISO 527 de 15 à 450 MPa, de préférence de 40 à 400 MPa, de manière particulièrement préférée de 20 à 100 MPa.

3. Pneumatique de véhicule selon l'une quelconque des revendications précédentes, **caractérisé en ce qu'**une troisième couche d'agent d'étanchéité supplémentaire (12) est agencée radialement vers l'intérieur sur la deuxième couche d'agent d'étanchéité (10), les agents d'étanchéité de la deuxième et de la troisième couche d'agent étanchéité supplémentaire différant l'un de l'autre en termes de viscosité de cisaillement dynamique à 100 °C, la viscosité de la deuxième couche d'agent d'étanchéité (12) étant au moins 1,15 fois supérieure à celle de la troisième couche d'agent d'étanchéité supplémentaire (12).

4. Pneumatique de véhicule selon l'une quelconque des revendications 1 ou 2, **caractérisé en ce qu'**une deuxième couche textile (13) est agencée radialement vers l'intérieur sur la deuxième couche d'agent d'étanchéité (10) et une troisième couche d'agent d'étanchéité supplémentaire (12) est agencée radialement vers l'intérieur sur la deuxième couche textile (13).

5. Pneumatique de véhicule selon l'une quelconque des revendications précédentes, **caractérisé en ce que** la ou les couches textiles (6, 13) comprennent au moins un matériau textile, qui est choisi dans le groupe constitué par a) les polyamides (PA) tels que le nylon, b) les polyesters tels que le polybutylène téréphtalate (PBT) et le polyéthylène téréphtalate (PET), c) les polycétones telles que la polyéther-éther-cétone (PEEK), d) le polyarylate, e) le polycarbonate (PC), f) les fibres de carbone, g) les polyéthers tels que le polyéther de phénylène (PPE), h) la cellulose, i) les dérivés de cellulose tels que l'acétate de cellulose (CA) et le propionate de cellulose, j) la cellulose régénérée, k) la rayonne, l) les aramides tels que le m-aramide, le p-aramide et les mélanges de m-aramide et p-aramide, m) le polyoxyméthylène, n) les polymères fluorés, tels que le copolymère d'éthylène-tétrafluoroéthylène (ETFE) et l'éthylène-chlorotrifluoroéthylène (ECTFE), o) les polyoléfines, telles que le polypropylène (PP) et le polyéthylène (PE), p) les fibres naturelles, telles que le coton, le jute, le bambou et les fibres d'origine animale telles que la soie, la laine de mouton et les poils de chameau, q) les fibres de verre, r) le phénol-formaldéhyde, s) le polychlorure de vinyle (PVC), t) le polyuréthane (PU).

6. Pneumatique de véhicule selon l'une quelconque des revendications précédentes, **caractérisé en ce que** la première couche d'agent d'étanchéité (5) et la deuxième couche d'agent d'étanchéité (10) et éventuellement chaque couche d'agent d'étanchéité supplémentaire (12), notamment une troisième, comprennent un agent d'étanchéité, qui est basé sur la réticulation d'un caoutchouc et/ou d'une polyoléfine.

7. Pneumatique de véhicule selon l'une quelconque des revendications précédentes, **caractérisé en ce que** les fibres (11) présentent un diamètre (d) de 5 à 2 000 micromètres (µm).

8. Pneumatique de véhicule selon l'une quelconque des revendications précédentes, **caractérisé en ce que** la ou les couches textiles (6, 13) comprennent des structures linéaires orientées parallèlement les unes aux autres, telles que notamment des fibres (11) et/ou des fils et/ou des retors et/ou des cordes et/ou des câbles.

9. Pneumatique de véhicule selon l'une quelconque des revendications précédentes, **caractérisé en ce que** la ou les couches textiles (6, 13) comprennent un tissu de fibres (11) et/ou fils et/ou cordes.
